# FASCICULE DE BREVET EUROPEEN

(11) **EP 1 210 917 B1**
(45) Date de publication et mention de la délivrance du brevet: **09.06.2004**
(21) Numéro de dépôt: 00126234.4
(22) Date de dépôt: 01.12.2000
(51) Int. Cl.: A61C 3/04

(54) **Présentoir pour fraises dentaires**
Behälter für Zahnbohrer
Dental bur storage device

(43) Date de publication de la demande: 05.06.2002
(73) Titulaire: Maillefer Instruments Holding SA, 1338 Ballaigues (CH)
(72) Inventeur: Capt, Michel, 1337 Vallorbe (CH)
(74) Mandataire: Micheli & Cie

(56) Documents cités:
- US-A- 4 306 862
- US-A- 5 358 112

## Description

La présente invention se rapporte aux présentoirs pour fraises dentaires. Les fabricants de fraises dentaires ont l'habitude entre autre de vendre des sets de fraises dentaires regroupant toutes les fraises nécessaires pour une certaine opération sur un même support ou présentoir. Ainsi, le dentiste peut choisir un présentoir en fonction de l'opération qu'il entend conduire et a ainsi sous la main toutes les fraises nécessaires à cette opération. De tels présentoirs comportent un socle muni de passages dont le diamètre et la profondeur correspondent à chaque fraise à utiliser. De plus, la succession de ces passages correspond à la succession des fraises dans l'ordre où elles sont utilisées par le dentiste pour l'opération envisagée. Ces présentoirs comportent encore un couvercle et le tout est agencé de manière à pouvoir être lavé et stérilisé en une seule opération, le présentoir étant rempli de fraises. Le document US-4 306 862 décrit un présentoir standard comportant un socle et un couvercle, le socle étant muni de plusieurs passages. Le socle a plusieurs niveaux et chaque niveau comporte des passages avec des diamètres différents par niveau.

Ces présentoirs standards, munis d'un set déterminé de fraises, ne satisfont pas totalement les dentistes. En effet, chaque dentiste a une pratique personnelle et chaque opération est particulière et dépend notamment des caractéristiques dentaires du patient. Ainsi, il est fréquent que de tels sets standards de fraises comportent trop ou pas assez de fraises ou des fraises inadaptées à la pratique du dentiste. Cela peut conduire à des pertes de temps, à la mise au rebut de fraises non utilisées et à la complémentation du set par des fraises sélectionnées par le dentiste.

Avec l'utilisation de tels présentoirs standards il est rare que le set de fraises puisse être utilisé dans la séquence prévue sans aucun changement de sorte que l'utilité de ces présentoirs standards est très restreinte.

La présente invention a pour but la réalisation d'un présentoir pouvant accepter dans l'ordre désiré par le dentiste le set de fraises nécessaires à une opération comportant les fraises que le dentiste aura lui-même sélectionnées et placées dans l'ordre qu'il désire dans le but de faciliter le travail du dentiste.

La présente invention a pour objet un présentoir pour fraises dentaires obviant aux inconvénients précités et permettant de réaliser les buts énoncés plus haut et qui présente les caractéristiques énoncées à la revendication 1.

Le dessin annexé illustre schématiquement et à titre d'exemple trois formes d'exécution particulières du présentoir pour fraises dentaires selon l'invention.

La figure 1a illustre le présentoir complet en perspective.

La figure 1b est une vue en perspective partielle de dessous du présentoir.

La figure 2 illustre en plan le socle d'une première forme d'exécution du présentoir.

Les figures 3,4 et 5 sont des coupes suivant les lignes A-A; B-B et C-C de la figure 2.

La figure 6 est une vue partielle en plan du socle d'une seconde forme d'exécution du présentoir.

Les figures 7 et 8 sont des coupes suivant les lignes D-D et E-E de la figure 6.

La figure 9 est une vue partielle en plan du socle d'une troisième. forme d'exécution du présentoir.

La figure 10 est une vue agrandie d'une partie de la surface du socle illustré à la figure 9.

La figure 11 est une coupe suivant la ligne F-F de la figure 9.

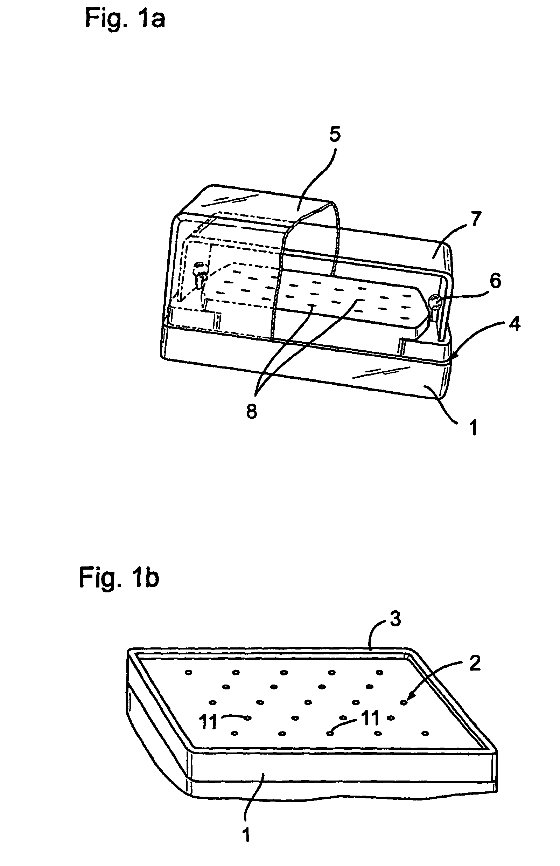

Le présentoir pour fraises dentaires illustré aux figures 1a et 1b comporte un socle 1 en une résine synthétique résistante au lavage et à la stérilisation. Ce socle 1 comporte dans sa surface inférieure un évidement 2 entouré d'un rebord 3. La périphérie de ce socle 1 comporte un épaulement 4 servant d'appui à la base d'un couvercle 5 également en résine synthétique, mais de préférence transparent ou translucide résistant au lavage et à la stérilisation.

La face supérieure du socle 1 comporte deux organes de fixation 6 servant à fixer de façon amovible sur ce socle une tôle de protection en forme de U 7.

Le socle 1 est transpercé de part en part par une pluralité de passages 8 traversants disposés régulièrement sur la surface du socle. Comme on le verra plus loin en détails, ces passages 8 sont destinés à recevoir la queue d'une fraise dentaire.

Dans l'exemple illustré, les organes de fixation 6 de la tôle de protection 7 ainsi que cette dernière sont réalisés en acier inoxydable, ainsi tous les éléments constitutifs du présentoir peuvent supporter sans altération, lavage, nettoyage et stérilisation.

La tôle de protection 7 sert à maintenir en place des fraises dentaires logées dans les passages 8 pendant les opérations de lavage et de stérilisation effectuées avec le couvercle non monté sur le support pour éviter que ces fraises ne se séparent du socle 1.

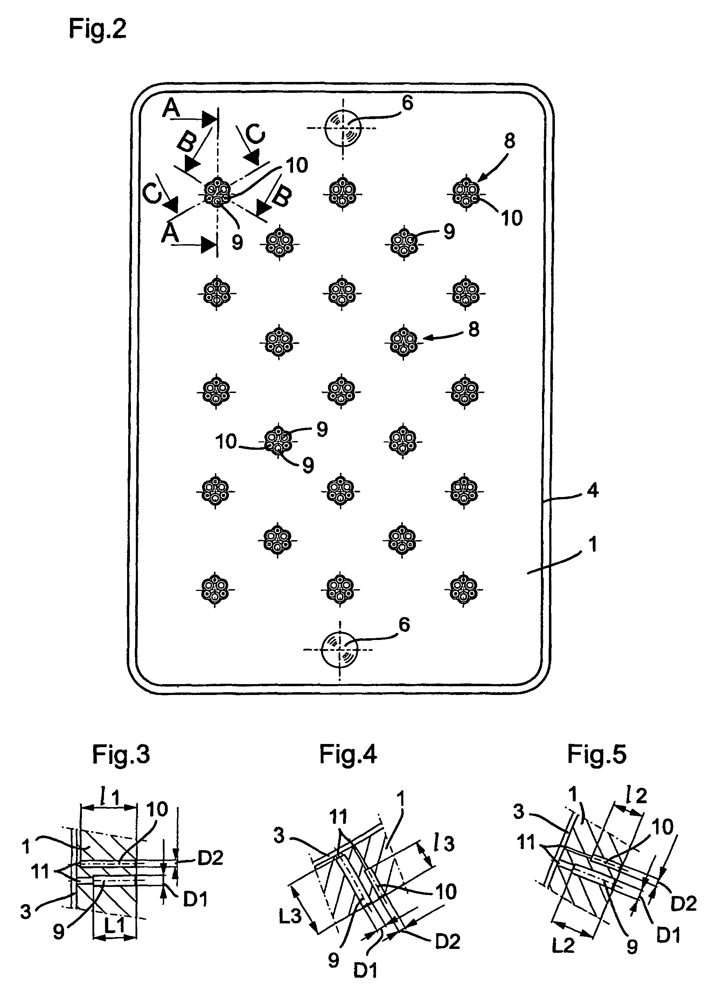

Dans la première forme d'exécution du présentoir illustré aux figures 2 à 5, chaque passage traversant 8 du socle 1 comporte six logements, trois 9 de grand diamètre D1, 2,35 mm et trois 10 de petit diamètre D2, 1,60 mm, diamètres correspondants au diamètre standard ISO des queues de fraises dentaires. On peut ainsi loger dans chaque passage 8 indifféremment une fraise dentaire dont la queue présente un grand diamètre ou un petit diamètre standard.

De plus, les trois perçages de grand diamètre 9 d'un même passage 8 présentent des longueurs ou profondeurs différentes L1, L2, L3. Enfin, les trois perçages de petit diamètre 10 d'un même passage 8 présentent des longueurs ou profondeurs 11,12,13 différentes.

Les fraises standards ISO présentant des queues de différentes longueurs suivant leur forme et leur taille peuvent donc toutes trouver un logement leur correspondant dans chaque passage 8.

De cette façon le dentiste choisit les fraises dentaires, quels que soient le diamètre et la longueur de leur queue parmi les fraises standards ISO à sa disposition qui lui sont nécessaires pour une opération ou un travail déterminé. Il les place ensuite dans l'ordre de son intervention, chacune dans un des perçages d'un passage 8 et peut ainsi établir un set de fraises dentaires particularisé adapté à sa manière de travailler pour une intervention donnée.

Une fois les fraises en place, la tôle de protection est mise en place, fixée sur les organes de fixation 6 et le présentoir ouvert ainsi que son couvercle peuvent être alors lavés et stérilisés. Après stérilisation le couvercle 5 est placé sur le socle 1 et le présentoir est stocké jusqu'à l'utilisation des fraises par le dentiste.

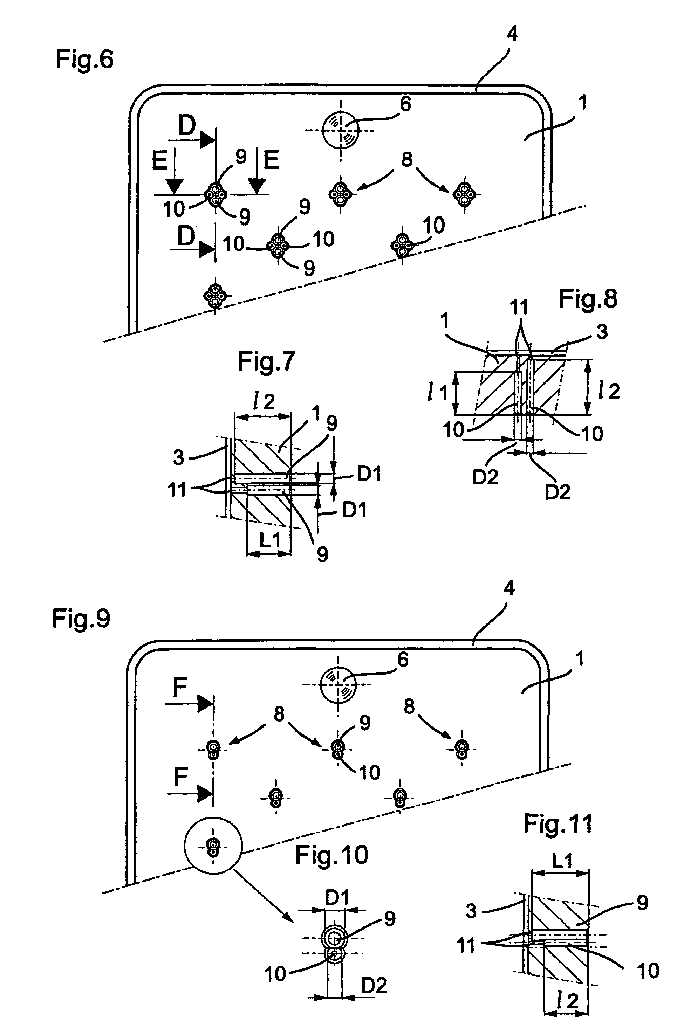

Dans la seconde forme d'exécution illustrée aux figures 6 à 8, les passages 8 ne sont constitués que de quatre perçages chacun, deux 9 de grand diamètre D1 et de longueurs différentes L1, L2 et deux de petit diamètre D2 et également de longueurs différentes I1, I2.

Dans la troisième forme d'exécution illustrée aux figures 9 à 11, les passages 8 sont constitués de deux perçages l'un 9 de grand diamètre D1 et de longueur L1 et l'autre de petit diamètre D2 et de longueur 12.

Dans toutes les formes d'exécution, au moins l'un des perçages 9,10 de chaque passage 8 traversant le socle 1 est prolongé par un perçage de plus petit diamètre 11 pour établir une communication entre la face inférieure et la face supérieure du support permettant un meilleur lavage et une meilleure stérilisation des socles et notamment des passages 8.

L'intérêt de ce nouveau présentoir pour fraises dentaires est que chaque dentiste peut y insérer dans l'ordre qu'il veut n'importe quelle fraise standard dans les passages 8 qui présentent toujours un diamètre et une profondeur adaptés à la fraise choisie.

Bien entendu, ces présentoirs polyvalents peuvent être vendus vides, le dentiste le garnissant alors de fraises selon son besoin, ou garni d'une séquence bien précise de fraises qui serait alors indiquée sur le présentoir pour l'identifier.

Ces nouveaux présentoirs sont moins chers que ceux existants à l'heure actuelle, car ils sont fabriqués en plus grande série, ils résistent à la stérilisation et permettent une combinaison infinie des différentes séquences de fraises. Il en résulte un moins grand stock de fraises chez le dentiste, moins de risques de manipulation et de confusion par le praticien qui prépare lui-même ses séquences de fraises.

## Revendications

1. Présentoir pour fraises dentaires comportant un socle (1) et un couvercle (5), le socle (1) étant muni d'une pluralité de passages (8) répartis sur sa surface destinés chacun à recevoir une fraise dentaire; **caractérisé par le fait que** chacun de ces passages (8) comporte au moins deux perçages (9,10) de diamètres différents correspondants à des diamètres standards de queues de fraises dentaires.

2. Présentoir selon la revendication 1, **caractérisé par le fait que** les perçages (9,10) d'un passage (8) présentent des profondeurs différentes correspondant à des longueurs de queues standards de fraises dentaires.

3. Présentoir selon la revendication 1, **caractérisé par le fait que** chaque passage (8) comporte quatre perçages, deux (9) de grand diamètre et deux (10) de petit diamètre et **par le fait que** la profondeur des deux perçages (9) de grand diamètre est différente de même que la longueur des deux perçages (10) de petit diamètre est différente.

4. Présentoir selon la revendication 1, **caractérisé par le fait que** chaque passage (8) comporte six perçages, trois (9) de grand diamètre et trois (10) de petit diamètre.

5. Présentoir selon la revendication 4, **caractérisé par le fait que** les perçages (9,10) de même diamètre d'un passage (8) présentent des profondeurs différentes.

6. Présentoir selon l'une des revendications précédentes, **caractérisé par le fait que** chaque passage (8) comporte au moins un perçage (9,10) relié à la face inférieure du socle (1) par un perçage (11) de plus petit diamètre que celui du perçage (9,10) correspondant.

7. Présentoir selon l'une des revendications précédentes, **caractérisé par le fait que** la face supérieure du socle (1) comporte des organes de fixation (6) d'une tôle de protection (7), cette tôle pouvant être fixée de façon amovible au socle grâce à ces organes de fixation (6).

## Patentansprüche

1. Behälter für Zahnbohrer mit einem Untersatz (1) und einem Deckel (5), wobei der Untersatz mit einer Mehrzahl von Durchlässen (8) versehen ist, die über seine Oberfläche verteilt und dafür bestimmt sind, je einen Zahnbohrer aufzunehmen, **dadurch gekennzeichnet, dass** jeder dieser Durchlässe (8) zumindest zwei Bohrungen (9, 10) mit verschiedenen Durchmessern umfasst, die den Standarddurchmessern der Zahnbohrerschäfte entsprechen.

2. Behälter nach Anspruch 1, **dadurch gekennzeichnet, dass** die Bohrungen (9, 10) eines Durchlasses (8) verschiedene Tiefen aufweisen, die den Längen der Standardschäfte von Zahnbohrern entsprechen.

3. Behälter nach Anspruch 1, **dadurch gekennzeichnet, dass** jeder Durchlass (8) vier Bohrungen umfasst, nämlich zwei (9) mit grossem Durchmesser und zwei (10) mit kleinem Durchmesser, und dadurch, dass die Tiefe der beiden Bohrungen (9) mit dem grossen Durchmesser unterschiedlich ist, ebenso wie die Länge der beiden Bohrungen (10) mit dem kleinen Durchmesser unterschiedlich ist.

4. Behälter nach Anspruch 1, **dadurch gekennzeichnet, dass** jeder Durchlass (8) sechs Bohrungen umfasst, nämlich drei (9) mit grossem Durchmesser und drei (10) mit kleinem Durchmesser.

5. Behälter nach Anspruch 4, **dadurch gekennzeichnet, dass** die Bohrungen (9, 10) gleichen Durchmessers eines Durchlasses (8) unterschiedliche Tiefen aufweisen.

6. Behälter nach einem der vorangehenden Ansprüche, **dadurch gekennzeichnet, dass** jeder Durchlass (8) zumindest eine Bohrung (9, 10) umfasst, die mit der Unterseite des Untersatzes (1) durch eine Bohrung (11) mit einem kleineren Durchmesser als dem der entsprechenden Bohrung (9, 10) verbunden ist.

7. Behälter nach einem der vorangehenden Ansprüche, **dadurch gekennzeichnet, dass** die Oberseite des Untersatzes (1) Befestigungsorgane (6) für ein Schutzblech (7) umfasst, wobei dieses Blech mit diesen Befestigungsorganen (6) in abnehmbarer Weise am Untersatz befestigt werden kann.

## Claims

1. Rack for dental burs, comprising a base (1) and a cover (5), the base (1) being provided with a plurality of passages (8) distributed over its surface each adapted to receive a dental bur, **characterised by** the fact that each of the passages (8) comprises at least two piercings (9,10) of different diameters corresponding to standard diameters of dental bur shanks.

2. Rack according to claim 1, **characterised by** the fact that the piercings (9, 10) of a passage (8) have different depths corresponding to lengths of standard shanks of dental burs.

3. Rack according to claim 1, **characterised by** the fact that each passage (8) comprises four piercings, two piercings (9) of large diameter and two piercings (10) of small diameter and by the fact that the depth of the two piercings (9) of large diameter is different, as is the length of the two piercings (10) of small diameter.

4. Rack according to claim 1, **characterised by** the fact that each passage (8) comprises six piercings, three piercings (9) of large diameter and three piercings (10) of small diameter.

5. Rack according to claim 4, **characterised by** the fact that the piercings (9, 10) of the same diameter of a passage (8) have different depths.

6. Rack according to one of the preceding claims, **characterised by** the fact that each passage (8) comprises at least one piercing (9, 10) connected to the lower surface of the base (1) by a piercing (11) of smaller diameter than that of the corresponding piercing (9, 10).

7. Rack according to one of the preceding claims, **characterised by** the fact that the upper surface of the base (1) comprises securement members (6) for a protective sheet (7), this sheet being adapted to be secured removably to the base thanks to these securement members (6).
